Europäisches Patentamt

European Patent Office

Office européen des brevets

(11) Numéro de publication: **0 041 899**
**B1**

(12) **FASCICULE DE BREVET EUROPEEN**

(45) Date de publication du fascicule du brevet: **12.09.84**

(21) Numéro de dépôt: **81400909.8**

(22) Date de dépôt: **09.06.81**

(51) Int. Cl.³: **C 03 B 23/035,** C 03 B 27/04, C 03 B 23/03

(54) **Eléments de bombage de plaques en un matériau à l'état plastique, application de ces éléments au bombage et à la trempe desdites plaques et dispositifs équipés de tels éléments.**

(30) Priorité: **10.06.80 FR 8012851**

(43) Date de publication de la demande:
**16.12.81 Bulletin 81/50**

(45) Mention de la délivrance du brevet:
**12.09.84 Bulletin 84/37**

(84) Etats contractants désignés:
**BE DE GB IT LU NL**

(56) Documents cités:
**FR-A-1 341 005**
**FR-A-2 221 409**
**FR-A-2 428 616**
**US-A-3 375 093**
**US-A-3 477 839**

(73) Titulaire: **SAINT-GOBAIN VITRAGE**
**Les Miroirs 18, avenue d'Alsace**
**F-92400 Courbevoie (FR)**

(72) Inventeur: **Presta, Claude**
**50 bis rue du 22 Septembre**
**F-92400 Courbevoie (FR)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

## Description

L'invention se rapporte au bombage de plaques en un matériau à l'état plastique, notamment de feuilles de verre à une température égale au moins à la température de ramollissement de ce verre. Elle a plus particulièrement pour objet des éléments utilisables comme forme de bombage de ces plaques et des dispositifs équipés d'au moins un tel élément. Elle concerne également l'application de ces éléments au bombage et/ou à la trempe desdites feuilles.

Il est connu d'utiliser comme forme de bombage une pluralité de tiges cintrées, orientables chacune autour d'un axe passant par ses deux extrémités et recouvertes d'une gaine tubulaire entraînée en rotation. En faisant reposer sur le lit plat de toutes ces tiges couchées dans le même plan longitudinal une feuille de verre chauffée jusqu'à l'état plastique, il est possible, comme décrit dans le brevet français FR 1 476 785, de conférer un bombage à ladite feuille en faisant pivoter en même temps les tiges d'un même angle. Ainsi, lorsque le lit formé par les tiges cintrées cesse d'être plat, la feuille de verre à l'état plastique épouse la forme approximativement cylindrique donnée par toutes ces tiges cintrées relevées, soit en s'affaissant sur ses bords de son propre poids, soit en s'affaissant sous la pression d'une contreforme. Il est ainsi possible d'obtenir des feuilles plus ou moins bombées, le bombage étant nul quand les tiges restent toutes couchées dans un même plan, le bombage étant maximum quand toutes les tiges onto pivoté d'un angle droit par rapport au plan précédemment indiqué, et un bombage intermédiaire entre ces deux extrêmes étant obtenu quand les tiges prennent une même inclinaison intermédiare.

Selon le brevet français FR 2 312 463, on sait également effectuer le bombage de façon progressive en constituant avec les mêmes tiges cintrées un lit de conformation à convexité progressive, la première tige du lit étant pratiquement couchée dans le plan des rouleaux qui amènent la feuille de verre au poste de bombage, la dernière tige ayant le redressement qui confère le bombage désiré et les tiges intermédiaires étant elles aussi fixes, mais calées dans des positions d'autant plus redressées qu'elles sont plus proches de la dernière tige du lit de conformation. Ainsi, la feuille de verre se bombe au fur et à mesure de sa progression, sans qu'il soit nécessaire de modifier la position des tiges, réglée une fois pour toutes pour une fabrication à rayon de courbure donné.

Sur de telles installations et plus particulièrement sur la seconde, c'est-à-dire celle faisant l'objet du brevet FR 2 312 463, les réglages pour changer de rayon de courbure sont très faciles et très rapides. Mais les feuilles de verre ne sont portées que par des tiges espacées, d'autant plus espacées qu'il leur faut de la place pour s'incliner lors d'un changement du rayon de courbure de la forme de bombage et qu'il faut loger les moyens de commande de leur inclinaison. Il en résulte que les feuilles de verre acquièrent des ondulations qui sont perpendiculaires à leur axe de bombage et qui peuvent donc être gênantes pour la visibilité. Pour réduire cet inconvénient, il faudrait diminuer l'espacement entre les différentes tiges, mais on s'interdirait en même temps des possibilités de réglage dans une gamme étendue de rayons de courbure.

Par ailleurs, lorsqu'on fait défiler sur ces tiges cintrées redressées, des volumes de verre de forme non symétrique, ayant par exemple une forme en trapèze, ou disposés non symétriquement par rapport au plan de symétrie longitudinal du dispositif de bombage, il se produit une rotation desdits volumes, qui doit être corrigée à l'avance en disposant les volumes en oblique par rapport à la direction de défilement, avant leur arrivée sur les tiges cintrées. Ceci oblige, par conséquent, à disposer de fours de réchauffage du verre plus larges que strictement nécessaire, ce qui est d'autant plus gênant que la différence entre la longueur et la largeur des volumes est plus importante. Dans certains cas, du fait de l'importance du dévirage, certaines courbures sont même impossibles à obtenir.

Il existe un autre type de dispositif de bombage, qui procure une bonne qualité optique du verre, mais qui demande des interventions très longues, cent à deux cents fois plus que par les moyens précédents, lorsqu'on désire changer de rayon de courbure. Il s'agit d'un conformateur à coussin gazeux, comprenant une pluralité de plots de soufflage juxtaposés. Ce système est bien adapté au bombage de longues séries de volumes de verre avec un même rayon de courbure, mais, au contraire, il convient mal à des changements fréquents de rayon de courbure.

La présente invention propose un dispositif de bombage du verre réunissant les avantages des deux systèmes connus, rappelés ci-dessus, à savoir conduire à un verre de bonne qualité optique, tout en se prêtant facilement à un changement du rayon de courbure à imprimer aux plaques à l'état plastique à traiter.

A cet effet, l'invention a pour objet un élément utilisable comme forme pour le bombage ou la trempe de plaques en un matériau à l'état plastique, cet élément destiné à être disposé en regard desdites plaques, transversalement à leur direction d'avancement, étant tel qu'il présente un pluralité de profils dans un plan perpendiculaire à la direction d'avancement des plaques et qu'il comporte des moyens de règlage de sa position dans ce plan, ces moyens agissant de manière à conserver le sommet de la forme ainsi réalisée en un point fixe dudit plan.

Cette pluralité de profils est obtenue grâce à un rayon de courbure qui varie de façon continue, en particulier grâce à un profil en spirale, notamment une spirale logarithmique.

Dans un mode de réalisation, l'élément utilisable comme forme pour le bombage ou la trempe est constitué par un caisson équipé sur sa face tournée vers les plaques, de moyens de soufflage d'un gaz.

Dans un autre mode de réalisation, l'élément utilisable comme forme pour le bombage ou la trempe est constitué par un tige cintrée comportant une gaine entraînée en rotation autour d'elle.

L'invention a également pour objet un dispositif pour le bombage ou la trempe de plaques en un matériau à l'état plastique, notamment de feuilles de verre, tel qu'il comprend une ou plusieurs formes pour le bombage ou la trempe, dont une au moins possède au moins un élément, caisson ou tige cintrée, à profil défini précédemment, aisi que des moyens d'entraînement des plaques ou feuilles si nécessaire.

Lorsque l'on utilise une pluralité de caissons de bombage, ces caissons peuvent tous voir le même profil, et être juxtaposés, éventuellement avec un décalage dans leur basculement, suivant que le rayon de courbure que l'on désire imprimer à la feuille plastique traitée reste constant ou varie progressivement à mesure qu'elle progresse longitudinalement. Pour introduire la déformation transversale progressive que l'on recherche, on peut aussi utiliser une pluralité de caissons différents, étroitement justaposés, avec ou sans décalage dans leur basculement.

On peut de même utiliser plusieurs séries de caissons, les caissons d'une même série étant identiques, mais différents de ceux de la série suivante, laquelle peut en outre être décalée par basculement par rapport à la précédente.

Il est également possible d'utiliser un ou plusieurs caissons, dont la forme ne varie pas seulement transversalement, mais aussi suivant le sens d'avancement des feuilles à traiter.

Enfin, dans tous les cas précédents, il est possible de disposer les caissons successifs suivant une courbe, dans le sens de déplacement de la feuille à l'état plastique à traiter, pour les décaler verticalement les uns par rapport aux autres, afin d'imprimer en outre à celle-ci un bombage dans le sens longitudinal du déplacement.

Dans un autre mode de réalisation de l'invention, l'élément utilisable comme forme pour le bombage ou la trempe est une tige cintrée du même type que les tiges de la technique antérieure, entourées d'une gaine tubulaire entraînée en rotation, mais ayant un profil variable identique à celui des caissons et étant basculable dans un plan transversal à la direction d'avancement des feuilles de verre.

En variante, on disposera entre les caissons du premier mode de réalisation, ou à la place de certains d'entre eux, des tiges du deuxième mode de réalisation.

On peut employer, comme moyen d'entraînement des feuilles à traiter, tout moyen connu en soi, notamment des chaînes à taquets disposées latéralement. Les taquets de maintien seront de préférence réglables, de manière à pouvoir adapter leur position à la forme des plaques. Pour chaque série de plaques, les taquets seront réglés un fois pour toutes et les taquets et les plaques se présenteront avec la même périodicité.

De préférence, l'ensemble du dispositif de bombage sera incliné latéralement du côté de la chaîne à taquets.

On peut également employer, comme moyen d'entraînement, des tiges cintrées entourées d'une gaine tubulaire tournante, ayant le même profil que les caissons et intercalées entre lesdits caissons.

Ainsi qu'on le décrira ci-après plus en détail, le ou les caissons du dispositif de bombage conforme à l'invention auront avantageusement, dans un plan perpendiculaire à la direction d'avancement des feuilles à traiter, un profil de spirale, notamment un profil de spirale logarithmique. En effet, d'une part, un arc de faible longueur d'une telle courbe présente un rayon de courbure qui varie suffisamment rapidement et progressivement et, d'autre part, un caisson ayant un tel profil se prête à un changement facile et rapide du rayon de courbure. L'invention n'est naturellement pas limitée à des caissons ayant ce profil, mais ceux-ci en constituent une forme de mise en oeuvre préférée.

Les applications des caissons de bombage conformes à l'invention au bombage et/ou à la trempe de plaques en un matériau à l'état plastique, notamment de feuilles de verre à une température au moins egale à la température de ramollissement, constituent enfin d'autres objets de l'invention.

Ces defférents objets seront décrits plus en détail ci-après, en référence aux dessins schématiques annexés, qui n'ont pas de caractère limitatif. Sur ces dessins:

— la figure 1 illustre un dispositif de bombage équipé de caissons conformes à l'invention espacés les uns des autres;
— la figure 2 représente une variante du dispositif de la figure 1, dans laquelle les différents caissons sont jointifs et définissent une forme de bombage qu'on peut assimiler à un caisson unique;
— la figure 3 illustre un autre type de dispositif de bombage équipé de caissons conformes à l'invention et de tiges entraînées en rotation;
— les figures 4, 5 et 6 sont des schémas rappelant les propriétés d'une spirale logarithmique et illustrant les avantages du choix d'un tel profil pour les caissons conformes à l'invention;

— la figure 7 illustre le réglage en position d'un tel caisson à profil de spirale logarithmique;

— la figure 8 illustre l'application de caissons conformes à l'invention à la réalisation d'une sole à profil réglable pour coussin gazeux;

— la figure 9 montre le décalage de deux caissons successifs d'une telle sole;

— la figure 10 est un schéma illustrant l'application d'un caisson conforme à l'invention à la trempe verticale de volumes de verre.

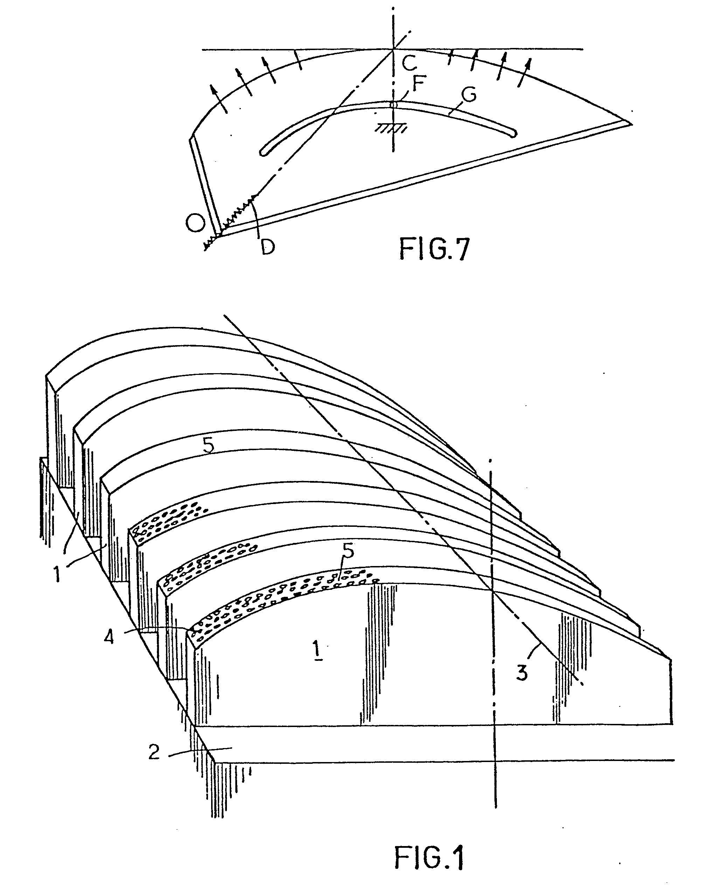

Le dispositif de bombage représenté sur la figure 1 comprend une pluralité de caissons 1, supportés par un même bâti 2. Ces caissons sont destinés à être disposés perpendiculairement au trajet 3 d'un plaque en un matériau à l'état plastique, du verre par exemple, et au dessous de cette plaque, des plots ou des buses de soufflage étant prévus à la surface supérieure 5 desdits caissons, pour diriger un gaz, de l'air par exemple, vers la face inférieure de cette plaque, qui repose ainsi sur un coussin gazeux.

Conformément à l'invention, la face supérieure 5 des caissons 1 a un profil incurvé, dont le rayon de courbure varie continûment d'une extrémité à l'autre d'un caisson, transversalement à la direction 3. Il est ainsi possible, en disposant judicieusement un caisson dans un plan transversal à cette direction 3 d'avancement des plaques qui sortent du four de réchauffage, d'amener au-dessous du passage de la plaque à bomber la partie de la face supérieure de ce caisson qui présente le rayon de courbure désiré. Il est aussi possible, en décalant latéralement de façon progressive, les uns par rapport aux autres, des caissons identiques d'un ensemble de bombage, de faire varier de façon sensiblement continue le rayon de courbure imprime à une plaque à l'état plastique, entraînée par des moyens connus en soi (non représentés) tels qu'une chaîne à taquets, à mesure que cette plaque progresse au dessus desdits caissons, perpendiculairement à ceux-ci.

Dans cette forme de réalisation du dispositif conforme à l'invention, l'espacement des caissons risque toutefois de donner naissance dans la plaque de verre à des ondulations, comme c'est le cas avec les dispositifs à tiges rotatives de la technique antérieure.

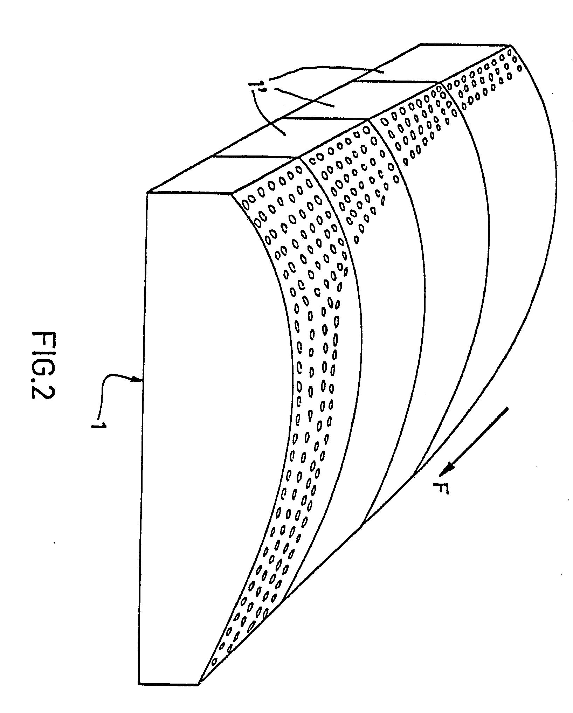

Pour remédier à cete inconvénient, on peut disposer les caissons l'jointivement, comme représenté sur la figure 2, et faire varier leur profil régulièrement, suivant le sens d'avancement F des plaques traitées, de manière qu'ils soient équivalents à un unique caisson continu lorsqu'ils sont juxtaposés.

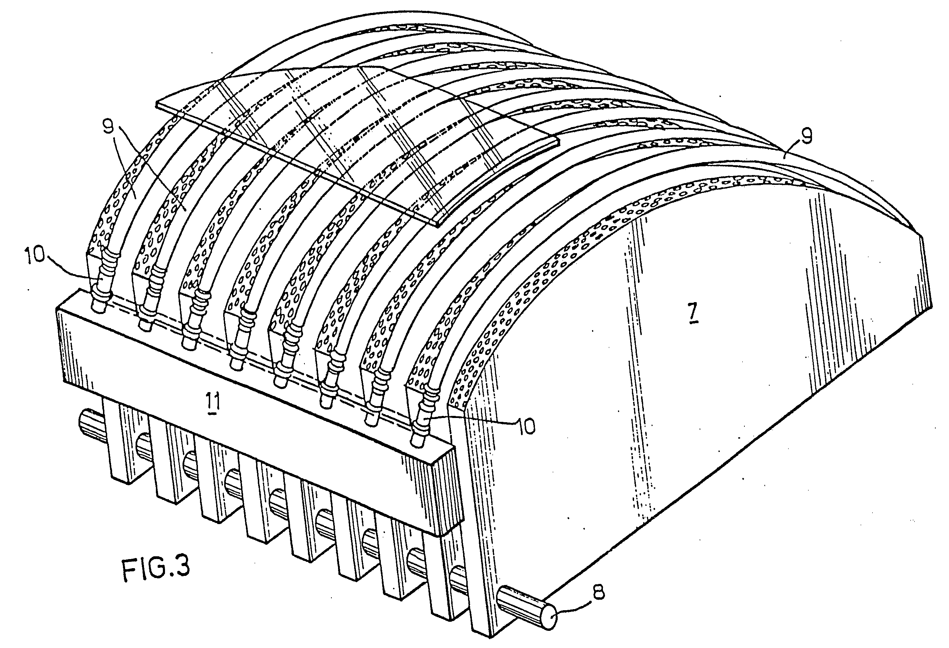

On peut aussi, comme représenté sur la figure 3, interposer entre des caissons 7, solidarisés par une même barre 8, des tiges cintrées 9 de la technique antérieure, revêtues d'une gaine tubulaire entraînée en rotation par l'une de ses extrémités 10, ces tiges cintrées 9 ayant alors le même profil que les caissons. Les tiges cintrées 9 sont portées par un bâti 11 solidaire des caissons 7 et c'est l'ensemble des tiges 9 et des caissons 7 que l'on déplace dans un plan transversal, par exemple par basculement, lorsque l'on désire faire varier le rayon de bombage. Les tiges 9 font légèrement saillie au-dessus de la face supérieure des caissons 7 et elles contribuent à l'entraînement des plaques de matière à l'état plastique à traiter, en même temps qu'au bombage de ces plaques. Ces tiges 9 peuvent également être montées dans un bâti individuel.

La modification de la courbure de la forme de bombage ne s'opérant plus par inclinaison des tiges dans la direction du défilement des feuilles de verre, mais par basculement dans une direction perpendiculaire, l'espacement entre les différents éléments de la forme de bombage peut être très faible, et les défauts optiques qui pouvaient apparaître dans la technique antérieure sont supprimés.

Avantageusement, les tiges 9 ne sont pas dans un plan rigoureusement vertical, mais sont légèrement inclinées dans le sens d'avancement des plaques traitées, de façon à les auto-centrer suivant l'axe de bombage, tout en ne leur imprimant qu'une très faible rotation.

Il est encore possible de constituer la totalité de la forme de bombage, uniquement à l'aide de tiges cintrées, inclinables par basculement dans un direction perpendicuaire à la direction d'avancement des feuilles de verre. Ces tiges sont alors montées sur un bâti, individuel on commun à un groupe de tiges, et c'est l'ensemble tige-bâti qui est basculable.

Ainsi qu'il a été expliqué ci-dessus, la surface supérieure des caissons et/ou des tiges aura avantageusement la forme d'une spirale, notamment une spirale logarithmique, car cette forme se prête à un réglage en position très simple pour les caissons et par conséquent à une modification facile du rayon de courbure.

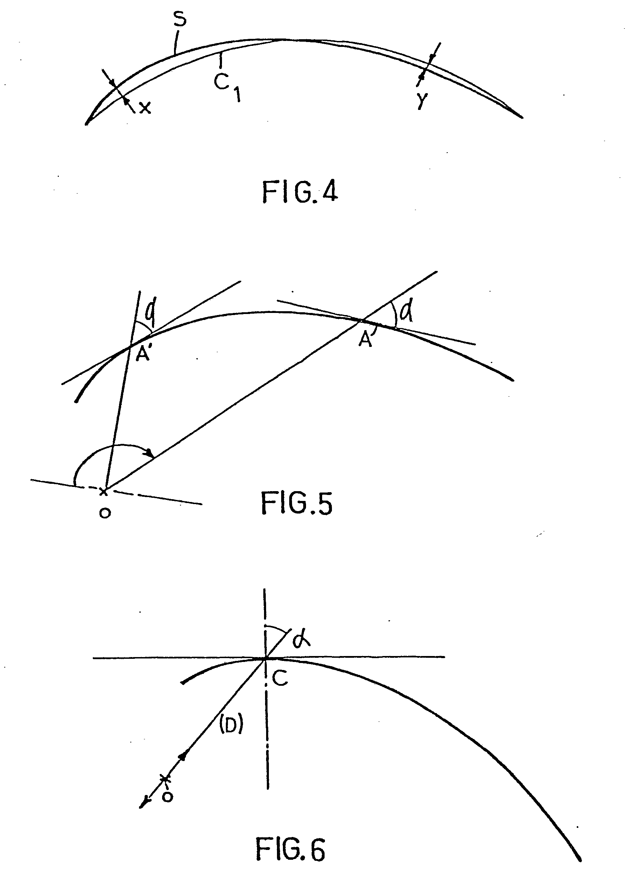

On rappelle que, dans un système de coordonnées polaires, l'équation donnant la valeur du rayon polaire $\rho$ (distance entre l'origine des coordonnées O et un point A de la courbe) en fonction de l'angel $\theta$ que fait ce rayon avec l'axe des abscisses (figure 5) est la suivante:

$$\rho = k e^{m\theta},$$

le rayon de courbure R en un point de la spirale situé à une longueur d'arc $s$ de l'origine étant en outre proportionnel à cet arc, suivant la relation R=ms.

Si l'on déplace une telle spirale dans son plan, de manière qu'elle passe toujours par un point fixe, on fait varier de façon continue le rayon de courbure en ce point.

Donc en déplaçant un élément de bombage, caisson ou tige, à surface supérieure en forme de spirale logarithmique dans son plan vertical, en face de la sortie du dispositif antérieur, par exemple du four de réchauffage du verre, on peut ainsi conserver le sommet dudit élément de bombage à un niveau constant, tout en faisant varier le rayon de courbure de la portion d'élément de bombage présentée en face de cette sortie.

En outre, si l'on choisit judicieusement les paramètres $k$ et $m$, on peut obtenir un arc de spirale logarithmique qui, sur une faible longueur, s'écarte très peu d'un arc de cercle permettant ainsi de fabriquer des vitrages à bombage cylindrique. C'est ainsi qu'une spirale répondant à l'équation suivante se révèle particulièrement avantageuse:

$$\rho = 1,4883 \, e^{\, 0,95\theta}$$

En effet, la portion de spirale commençant avec l'angle $\theta_o = 6,1067$ rds, la courbe permettant, pour un arc de 500 mm, de passer d'un rayon moyen R de courbure de 900 mm à 2 500 mm, a une longueur de 2 180 mm. Or, cette longueur d'élément de bombage de 2 180 mm est une longueur acceptable, facilement réalisable et qui peut remplacer, dans les chaînes de bomage installées, les anciennes tiges cintrées sans modifications importantes. En outre, toujours quand on considère des volumes à bomber de 500 mm d'arc, les écarts maxima aux extrémités desdits volumes, c'est-à-dire à 250 mm de l'arc de bombage entre la spirale et le cercle $C_1$ (figure 4) ayant le rayon moyen du volume bombé, sont, à 900 mm de rayon moyen, x=1,01 mm et y=1,37 mm et, à 2 500 mm de rayon moyen, x=0,14 mm et y=0,16 mm; ces écarts sont donc très faibles et des vitrages bombés suivant ce profil peuvent être considérés comme ayant un bombage cylindrique. On peut, bien entendu, dans le cadre de l'invention, utiliser un spirale logarithmique différente de celle dont l'équation vient d'être donnée. L'équation très précise, avec des coefficients à décimales, donnée ci-dessus à titre d'exemple, a le mérite de conduire à des valeurs entières des rayons de courbure, des longueurs, et ces valeurs correspondent exactement à la gamme des vitrages fabriqués et à la taille des installations actuelles. Bien entendu, une spirale logarithmique d'équation voisine de celle proposée ci-dessus, par exemple $\rho = 1,5 \, e^{\theta}$, en partant d'un $\theta_o$ de l'ordre de 6 radians, peut être envisagé pour des résultats sensiblement identiques.

Il est donc possible, en choisissant des caissons et/ou des tiges cintrées, ayant un tel profil de spirale lgarithmique, de faire varier, dans une gamme très large, les rayons de courbure, en déplaçant les caissons et/ou les tiges dans un plan transversal à la direction d'avancement des plaques de verre.

Le réglage en position de ces éléments de bombage, caissons ou tiges, utilise une autre propriété de la spirale logarithmique, à savoir que l'angle entre la rayon polaire OA et la tangente au point A de la courbe reste constant en tout point de la spirale (figure 5).

Si l'on désire que la tangente au sommet C de la forme de bombage constitué par le caisson et/ou la tige reste fixe, lorsque l'on déplace le caisson ou la tige dans un plan perpendiculaire à la direction d'avancement des plaques à traiter, afin que le faisson ou la tige reste tangent à ces plaques, il faut qu'au cours du réglage en position, l'axe de bombage OC (figure 6) reste fixe dans le plan, c'est-à-dire que le pôle O se déplace sur une droite fixe faisant un angle avec l'horizontale.

Dans la pratique, pour maintenir simultanément le sommet C en un point fixe, il suffit de matérialiser la droite D, par exemple par une crémaillère de réglage sur laquelle peut se déplacer le pôle O, et de ménager dans le caisson ou dans le bâti portant la tige cintrée, und glissière de réglage G parallèle à la spirale, dans laquelle est engagé un pivot fixe F, pour que tout déplacement du pôle O se traduise par un basculement de la spirale, c'est-à-dire par une modification du rayon de courbure R au point C, par lequel cette spiral continue de passer du fait de la constance de la distance CD.

Ce moyen de réglage du rayon de courbure est donc très simple, puisqu'il nécessite seulement le déplacement d'un point fixe du caisson ou du bâti portant la tige cintrée (le pôle O) suivant une droite fixe (la crémaillère D).

Une telle forme de bombage à profil de spirale logarithmique convient en outre particulièrement bien dans le cas des dispositifs de bombage déjà décrits en relation avec les figures 1 et 2, car elle permet d'éliminer ou de réduire très sensiblement la rotation des plaques traitées (dévirage) durant la progression de ces plaques.

Les dispositifs de bombage conformes à l'invention peuvent en outre être utilisés avantageusement pour la trempe d'une plaque. On rappelle, en effet, que dans ce processus de trempe, trois fonctions doivent être remplies simultanément, à savoir la sustentation, le transport et le refroidissement de la plaque. Avec les dispositifs selon l'invention, la sustentation est assurée par les caissons et/ou les tiges incurvées à profil logarithmiqué, le refroidissement est obtenu par soufflage d'un gaz à l'aide des caissons et le transport est réalisé par des chaînes à taquets et/ou par les tiges incurvées.

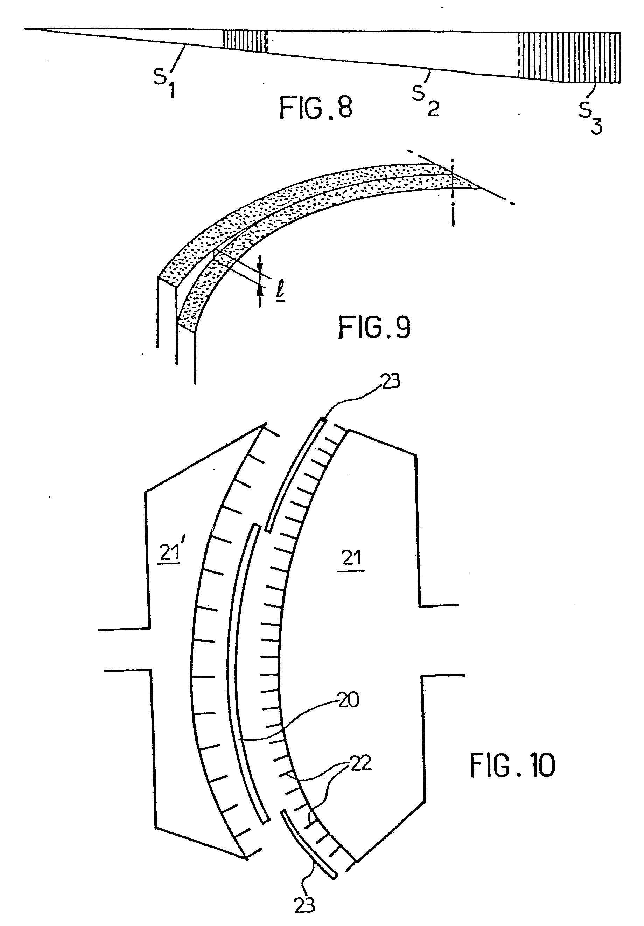

Le dispositif de la figure 8 comprend une sole fixe $S_1$, à rayon de bombage passage progressivement de l'infini à 2500 mm, puis une sole réglable $S_2$, dont le rayon de bombage passe progressivement de 2 500 mm au rayon final désiré, par exemple 900 mm, puis une sole $S_3$, cylindrique, avec un rayon de courbure constant et égal dans l'exemple à 900 mm. La sole $S_1$ peut être constituée d'une pluralité de caissons conformes à l'invention, identiques, légèrement décalés les uns par rapport aux autrs pour que le rayon de courbure varie progressivement, éventuellement bloqués en position. Il pourra également s'agir d'une sole à coussin gazeux, constituée d'un caisson unique porteur de plots de soufflage, dont la courbure évoluera de l'infini à 2 500 mm. Etant donné que tous les vitrages bombés demandés à l'heure actuelle sont bombés suivant un rayon de courbure maximum de 2 500 mm, il n'est pas gênant que cette sole soit fixe et non réglable.

La sole $S_2$, par contre, sera impérativement constituée de caissons juxtaposés identiques, réglables, conformes à l'invention et légèrement décalés les uns par rapport aux autres. Chaque caisson est décalé par rapport aux caissons voisins par manoeuvre d'une crémaillère. Les pas entre chaque extrémité de caisson sont de hauteur / (figure 9).

Le sole $S_3$ sera formée de caissons juxtaposés non décalés les uns par rapport aux autres, éventuellement solidarisés par une ou plusieurs barres 8, comme montré figure 3, ou éventuellement d'un caisson unique dont la surface supérieure sera idendique à celle de la pluralité de caissons juxtaposés.

Lorsque le rayon de courbure final devra être changé, on modifiera les décalages respectifs des caissons de la sole $S_2$ et également le basculement de chacun des caissons de la sole $S_3$ (ou de l'ensemble des caissons de $S_3$ solidarisés par la barre 8, ou du caisson unique).

Dans le cas où il s'agira de plusieurs caissons solidarisés, une crémaillère unique de réglage sera nécessaire.

Les crémaillères D, les glissières G, ou les pivots F (figure 7) pourront appartenir aux caissons ou être montés sur des châssis solidaires des caissons ou de chaque groupe de caissons.

L'entraînement des feuilles de verre se fera par chaîne à taquets, ou tiges cintrées ou autres.

Un exemple d'une telle sole, réalisée par la Demanderesse avec des caissons d'épaisseur standard de 50 mm, comprend d'abord une sole fixe $S_1$ de 3 300 mm de longueur, puis une sole réglable $S_2$ de conformation de 5 700 mm de longueur, constituée par la juxtaposition de 114 caissons identiques, mais décalés, et enfin une sole cylindrique $S_3$ de 1 000 mm, constituée par l'empilement de 20 caissons identiques non décalés. Dans la forme $S_2$, les pas / sont au plus de 0,29 mm à 250 mm de l'axe, donc d'une hauteur très faible que les plaques de verre peuvent aisément franchir.

Une telle sole pourra également être réalisée avec des tiges cintrées à profil de spirale, notamment de spirale logarithmique, ou avec une combinaison de caissons et de tiges cintrées. Dans la mesure où le poste de trempe ne comprendre que de telles tiges cintrées, des moyens de soufflage classiques seront prévus entre lesdites tiges.

La figure 10 illustre l'application à la trempe verticale d'une feuille de verre 20, d'un caisson 21 conforme à l'invention, ayant un profil de spirale logarithmique. Ce caisson comporte à sa surface des busettes 22, par lesquelles un gaz peut être soufflé en direction de la feuille à tremper. Des plaques souples d'obturation 23 permettent de masquer les busettes non utilisées. Dans cette application, un seul et même caisson permet de tremper des feuilles cylindriques ayant des rayons de courbure différents, en les amenant en regard de la portion de surface du caisson de rayon moyen correspondant à leur rayon de courbure. Ainsi, qu'il est connu dansla technique de la trempe verticale, un deuxième caisson 21' de forme complémentaire du premier caisson 21 peut également être disposé de l'autre côté de la feuille de verre.

En outre, la forme des caissons peut varier non seulement dans une direction de l'espace suivant une spirale, mais elle peut également varier suivant une spirale suivant la direction de l'espace perpendiculaire à la première.

De la même façon, le bombage de feuilles de verre en position verticale se fait avec une forme et une contre forme ayant, soit des profils logarithmiques dans une seule direction, pour faire du bombage cylindrique, soit des profils logarithmiques dans deux directions (profil d'une portion de tore), pour un bombage dans deux directions différentes.

Les éléments de bombage décrits tout au long de cette description ou représentés sur les dessins constituent des formes de bombage ou des caissons de trempe de forme convexe. Mais il est bien entendu que les éléments de bombage et/ou de trempe, qu'ils soient tiges cintrées ou caissons peuvent également constituer des formes concaves.

L'invention fournit donc un moyen simple et pratique, applicable aussi bien au bombage qu'à la trempe de plaques d'un matériau à l'état plastique, notamment de feuilles de verre, à une température égale ou supérieure à la température de ramollissement du verre. Dans ce dernier cas, les feuilles de verre ainsi traitées ont des qualités optiques au moins égales à celles obtenues avec les dispositifs de la technique antérieure dont les caractéristiques ont été rappelées ci-dessus.

## Revendications

1. Elément pour le bombage ou la trempe de plaques en un matériau à l'état plastique, cet élément étant destiné à être disposé en regard desdites plaques, transversalement à leur direction d'avancement, ledit élément étant caractérisé en ce qu'il présent une pluralité de profils dans un plan perpendiculaire à la direction d'avancement des plaques et en ce qu'il comporte des moyens (F, G, D) de règlage de sa position dans ce plan, ces moyens (F, G, D) agissant de manière à maintenir le sommet (C) de la forme de bombage ainsi réalisée en un point fixe dudit plan.

2. Elément pour le bombage ou la trempe selon la revendication 1, caractérisé en ce que son profil ne présente pas de solution de continuité dans un plan transversal à la direction d'avancement des plaques à traiter, mais comporte un rayon de courbure qui varie de façon continue.

3. Elément pour le bombage ou la trempe selon l'une des revendications 1 et 2, caractérisé en ce que son profil dans un plan transversal à la direction d'avancement des plaques à traiter, est sensiblement celui d'une spirale, notamment une spirale logarithmique (S).

4. Elément pour le bombage ou la trempe selon la revendication 3, caractérisé en ce que ladite spirale logarithmique (S) a pour équation, dans un système de coordonnées polaires, une équation voisine de $\rho = 1,5\ e^{\theta}$.

5. Elément pour le bombage ou la trempe selon la revendication 4, caractérisé en ce que la portion de spirale prise en compte est celle qui commence avec un angle $\theta_0$ de l'ordre de 6 rds.

6. Elément pour le bombage ou la trempe selon l'une des revendications 1 à 5, caractérisé en ce que les moyens de réglage comprennent un moyen (D) de déplacement du pôle (O) de la spirale (S) suivant une droite fixe passante par le sommet (C) de la forme de bombage ou de trempe et un pivot fixe (F) disposé à l'aplomb de ce sommet (C) et engagé dans une glissière (G) appartenant au dit élément, parallèle à la spirale logarithmique.

7. Elément pour le bombage ou la trempe selon l'une des revendications 1 à 6 caractérisé en ce qu'il est constitué par un caisson (1) équipé sur sa face (5) cournée vers les plaques, de moyens (4) de soufflage d'un gaz.

8. Elément pour le bombage ou la trempe selon l'une des revendications 1 à 6, caractérisé en ce qu'il est constitué, par un tige cintrée (9) comportant une gaine entraînée en rotation autour d'elle.

9. Application d'un élément selon l'une des revendications 1 à 8, au bombage de plaques en un matériau à l'état plastique, notamment de feuilles de verre défilant à plat à une température au moins égale à la température de ramollissement du verre, caractérisée en ce que ledit élément est disposé transversalement à la direction d'avancement (3) desdites plaques ou feuilles, en dessous desdites plaques ou feuilles avec sa surface en forme de spirale orientée vers elles.

10. Application d'un élément selon la revendication 7, à la trempe verticale de plaques en un matériau plastique, notamment de feuiles de verre, caractérisée en ce que ledit élément (21) est orienté avec sa face équipée de moyens (4) de soufflage d'un gaz en regard des plaques ou des feuiles de verre disposées verticalement.

11. Application selon la revendication 10, caractérisée en ce que les plaques ou feuilles (20) sont disposées ou défilent verticalement entre l'élément (21) et un élément de forme complémentaire (21').

12. Dispositif pour le bombage ou la trempe de plaques en un matériau à l'état plastique, notamment de feuiles de verre, caractérisé en ce qu'il comprend une ou plusieures formes pour le bombage ou la trempe dont une au moins possède au moins un élément selon l'une des revendications 1 à 8 et de moyens d'entraînement des plaques ou feuiles si nècessaire.

13. Dispositif selon la revendication 12, caractérisé en ce qu'une forme possède une pluralité de caissons (1, 7) selon la revendication 7, identiques ou non, juxtaposés ou séparés les uns des autres.

14. Dispositif selon la revendication 13, caractérisé en ce que certains au moins des caissons (1, 7) dont décalés les uns par rapport aux autres, transversalement à la direction d'avancement des plaques.

15. Dispositif selon la revendication 14, caractérisé en ce que certains au moins des caissons sont décalés verticalement les uns par rapport aux autres.

16. Dispositif selon l'une des revendications 13 à 15, caractérisé en ce que des tiges cintrées (9) selon la revendication 8 sont interposées entre certains caissons (7).

17. Dispositif selon l'une des revendications 12 à 16, caractérisé en ce que les moyens d'entraînement desdites plaques comprennent des chaînes à taquets.

## Patentansprüche

1. Element zum Biegen oder Vorspannen von Platten aus einem Material in plastischem Zustand, wobei das Element quer zur Vorschubrichtung der Platten angeordnet ist, dadurch gekennzeichnet, daß das Element eine Anzahl von Profilen in einer Ebene senkrecht zur Vorschubrichtung der Platten sowie Mittel (F, G, D) zum Einstellen seiner Lage in dieser Ebene aufweist, wobei diese Mittel (F, G, D) den Scheitel (C) der derart ausgebildeten Biegeform in einem festen Punkt dieser Ebene halten.

2. Element zum Biegen oder Vorspannen nach Anspruch 1, dadurch gekennzeichnet, daß sein Profil in einer Ebene quer zur Vorschubrichtung der zu behandelnden Platten keine Unterbrechung der Kontinuität aufweist, jedoch einen Krümmungsradius besitzt, der sich kontinuierlich verändert.

3. Element zum Biegen oder Vorspannen nach einem der Ansprüche 1 und 2, dadurch gekennzeichnet, daß sein Profil in einer Ebene quer zur Vorschubrichtung der zu behandelnden Platten im wesentlichen das einer Spirale, insbesondere einer logarithmischen Spirale (S) ist.

4. Element zum Biegen oder Vorspannen nach Anspruch 3, dadurch gekennzeichnet, daß die logarithmische Spirale (S) als Gleichung in einem System von Polarkoordinaten eine Gleichung nahe von $\rho = 1,5 e^{\theta}$ ist.

5. Element zum Biegen oder Vorspannen nach Anspruch 4, dadurch gekennzeichnet, daß der in Betracht gezogene Abschnitt der Spirale derjenige ist, welcher mit einem Winkel $\theta_o$ in der Größe von 6 rad beginnt.

6. Element zum Biegen oder Vorspannen nach einem der Ansprüche 1 bis 5 dadurch gekennzeichnet, daß die Einstellmittel eine Einrichtung (D) für die Verschiebung des Pols (O) der Spirale (S) längs einer festen Geraden durch den Scheitel (C) der Form zum Biegen oder Vorspannen besitzt sowie einen festen Gelenkpunkt (F) aufweist, der in der Senkrechten vom Scheitel (C) angeordnet ist und sich in eine Gleitbahn (G) des Elements parallel zur logarithmischen Spirale befindet.

7. Element zum Biegen oder Vorspannen nach einem der Ansprüche 1 bis 6, dadurch gekennzeichnet, daß es durch einen Kasten (1) gebildet ist, welcher auf seiner zu den Platten gewandten Seite (5) mit Mitteln (4) zum Ausströmenlassen von Gas ausgerüstet ist.

8. Element zum Biegen oder Vorspannen nach einem der Ansprüche 1 bis 6, dadurch gekennzeichnet, daß es eine gekrümmte Stange (9) mit einer drehbar um die Stange angetriebenen Hülle aufweist.

9. Verwendung eines Elements nach einem der Ansprüche 1 bis 8 zum Biegen von Platten aus einem Material im plastischen Zustand, insbesondere von Glasscheiben, die bei einer Temperatur oberhalb des Erweichungspunktes von Glas sich in horizontaler Lage bewegen, dadurch gekennzeichnet, daß das Element quer zur Vorschubrichtung (3) der Platten oder Scheiben unterhalb von diesen angeordnet ist, wobei die in Form einer Spirale gebildete Oberfläche des Elements gegen die Platten oder Scheiben gerichtet ist.

10. Verwendung eines Elements nach Anspruch 7 zum vertikalen Vorspannen von Platten aus einem plastischen Material, insbesondere von Glasscheiben, dadurch gekennzeichnet, daß das Element (21) mit der mit den Mitteln (4) zum Ausströmenlassen von Gas ausgestattet Fläche auf die vertikal angeordneten Platten oder Scheiben aus Glas ausgerichtet ist.

11. Verwendung nach Anspruch 10, dadurch gekennzeichnet, daß die Platten oder Scheiben (20) zwischen dem Element (21) und einem Element mit einer komplementären Form (21') vertikal ausgerichtet sind oder vertikal durchlaufen.

12. Vorrichtung zum Biegen oder Vorspannen von Platten aus einem Material im plastischen Zustand, insbesondere von Glasscheiben, dadurch gekennzeichnet, daß die Vorrichtung eine oder mehrere Formen zum Biegen oder Vorspannen aufweist, von denen mindestens eine wenigstens ein Element nach einem der Ansprüche 1 bis 8 sowie bei Bedarf Mitnahmeeinrichtungen für die Platten oder Scheiben besitzt.

13. Vorrichtung nach Anspruch 12, dadurch gekennzeichnet, daß eine Form eine Anzahl von aneinandergrenzenden oder voneinander getrennten identischen oder nicht identischen Kästen (1, 7) gemäß Anspruch 7 besitzt.

14. Vorrichtung nach Anspruch 13, dadurch gekennzeichnet, daß mindestens einige der Kästen (1, 7) gegenüber den anderen quer zur Vorschubrichtung der Platten versetzt sind.

15. Vorrichtung nach Anspruch 14, dadurch gekennzeichnet, daß mindestens einige der Kästen vertikal bezüglich der anderen versetzt sind.

16. Vorrichtung nach einem der Ansprüche 13 bis 15, dadurch gekennzeichnet, daß gekrümmte Stangen (9) gemäß Anspruch 8 zwischen einigen Kästen (7) angeordnet sind.

17. Vorrichtung nach einem der Ansprüche 12 bis 16, dadurch gekennzeichnet, daß die Mitnahmeeinrichtung für die Platten Mitnehmerketten aufweist.

**Claims**

1. Element for curving or tempering of plates of material in the plastic state, the element being intended to be arranged facing said plates, transversely to their direction of advance, said element being characterised in that it has a plurality of cross-sections in a plane perpendicular to the direction of advance of the sheets and in that it comprises means (F, G, D) for adjusting its position in the plane, these means (F, G, D) acting so as to retain the summit (C) of the curving former thus made at a fixed point in said plane.

2. Element for curving or tempering according to claim 1, characterised in that its cross-section has no breach of continuity in a plane transverse to the direction of advance of the plates to be treated, but comprises a radius of curvature which varies continuously.

3. Element for curving or tempering according to one of claims 1 and 2, characterised in that its cross-section, in a plane transverse to the direction of advance of the plates to be treated, is substantially that of a helix, notably a logarithmic helix (S).

4. Element for curving or tempering according to claim 3, characterised in that said logarithmic helix (S) has, in a system of polar co-ordinates, an equation close to $p = 1.5 \, e^{\theta}$.

5. Element for curving or tempering according to claim 4, characterised in that the portion of the helix taken is that which starts with an angle $\theta_o$ of the order of 6 rds.

6. Element for curving or tempering according to one of claims 1 to 5, characterised in that the adjusting means comprise a means (D) for displacing the pole (o) of the helix (S) along a straight line passing through the summit (C) of the former for curving or tempering and a fixed pivot (F) arranged in the vertical line of the summit (C) and engaged in a slider (G) belonging to said element parallel to the logarithmic helix.

7. Element for curving or tempering according to one of claims 1 to 6, characterised in that it comprises a box (1) provided on its surface (5) directed towards the plates with means (4) for blowing gas.

8. Element for curving or tempering according to one of claims 1 to 6, characterised in that it comprises a curved rod (9) provided with a sheath driven in rotation thereabout.

9. Application of an element according to one of claims 1 to 8 to curving of plates of a material in the plastic state, notably glass sheets moving flatwise at a temperature higher than the softening temperature of the glass, characterised in that said element is arranged transversely to the direction of advance (3) of said plates or sheets, below said plates or sheets with its surface in the shape of a helix oriented theretowards.

10. Application of an element according to claim 7 to vertical tempering of plates of a plastic material, notably glass sheets, characterised in that said element (21) is oriented with its surface provided with means (4) for blowing gas facing the vertically arranged plates or sheets of glass.

11. Application according to claim 10, characterised in that the plates or sheets (20) are arranged or move vertically between the element (21) and an element of complementary shape (21').

12. Device for curving or tempering of plates in the plastic state, notably glass sheets, characterised in that it comprises one or more formers for curving or tempering of which at least one has at least one element according to one of claims 1 to 8 and means for driving the plates or sheets if necessary.

13. Device according to claim 12, characterised in that a former has a plurality of boxes (1, 7) according to claim 7 which may or may not be identical, juxtaposed or separated one from another.

14. Device according to claim 13, characterised in that at lest some of the boxes are separated one from another transversely to the direction of advance of the plates.

15. Device according to claim 14, characterised in that least some of the boxes are separated vertically one from another.

16. Device according to one of claims 13 to 15, characterised in that curved rods (9) according to claim 8 are interposed between some of the boxes (7).

17. Device according to one of claims 12 to 16, characterised in that the means for moving said plates comprise chains having holding blocks.

FIG.7

FIG.1

FIG.2

FIG.3

0 041 899

0 041 899

FIG.4

FIG.5

FIG.6

FIG.8

$S_1$    $S_2$    $S_3$

$\ell$

FIG.9

23

$21'$    $21$

20

22

23

FIG.10